**Europäisches Patentamt**

**European Patent Office**

**Office européen des brevets**

(19)

(11) Publication number: **0 229 377**
**A1**

# EUROPEAN PATENT APPLICATION

(21) Application number: **86117942.2**

(22) Date of filing: **23.12.86**

(51) Int. Cl.⁴ **C09D 11/06 , C09D 11/08**

(30) Priority: **30.12.85 US 814672**

(43) Date of publication of application:
**22.07.87 Bulletin 87/30**

(84) Designated Contracting States:
**AT BE CH DE ES FR GB GR IT LI LU NL SE**

(71) Applicant: **Gamblin, Rodger L.**
**8 Springhouse Road**
**Dayton Ohio 45409(US)**

(72) Inventor: **Gamblin, Rodger L.**
**8 Springhouse Road**
**Dayton Ohio 45409(US)**

(74) Representative: **Vossius & Partner**
**Siebertstrasse 4 P.O. Box 86 07 67**
**D-8000 München 86(DE)**

(54) **Low rub-off newspaper inks.**

(57) A liquid printing ink comprising a solution of

(a) a dye selected from the group consisting of nigrosine dye, induline dye, basic dyes, and mixtures of the foregoing dyes;

(b) a material selected from the group consisting of fatty acids, rosin acids and mixtures of fatty acids and rosin acids;

(c) an oil;

(d) a moderately polar material; and, optionally,

(e) a tackifying agent, (f) a demulsifier, or both a tackifying agent and a demulsifier.

The above ink is particularly adapted for use in a method of printing newspapers employing groundwood paper.

EP 0 229 377 A1

# LOW RUB-OFF NEWSPAPER INKS

The present invention relates to printing inks, methods of using such inks, and printed materials printed with such inks. The inks of the present invention are especially useful in printing newspapers and may be used in conventional printing presses (e.g., letterpress or offset printing presses).

Printing newspapers presents a difficult problem because it requires the use of inexpensive paper and inexpensive ink, in order to minimize the price of a newspaper, but at the same time requires high standards of performance from such paper and ink. For example, because news is a perishable commodity, it is required that a very high volume of material be printed in a very short time. This requirement has led to the use of inexpensive inks that become fixed upon the paper almost immediately after printing. Generally, such inks are combinations of a pigment ground with an ink oil. Such inks may also contain rosin or some other resin to impart suitable properties of tack and dispersibility to the pigment in the ink base. Such inks do not truly dry upon the paper. In actuality, the oil component of the ink tends to diffuse in amongst the fibers of the paper, leaving a highly viscous surface coating on the paper that is a combination of pigment particles and ink oil. This coating, when subjected to friction, tends to rub off on any object that it comes in contact with, thus soiling the reader's hands, clothing and furniture.

An inexpensive practical newspaper ink that is not subject to significant rub-off has heretofore been unavailable. In addition to providing a solution to the problem of rub-off, a successful newspaper ink should fulfill at least some, if not all, of the following requirements:

1) Groundwood paper, such as is used for the printing of newspapers, is relatively soft. As a result, fibers from the paper can adhere to an inked printing plate if an ink that attracts such fibers is used. Such fibers would build up on the face of the printing plates and cause the quality of the printing to be degraded. A newspaper ink must, therefore, have both a relatively low degree of tack or stickiness and a relatively low degree of internal cohesion so that the fibers of the paper substrate upon which printing occurs have little attraction for the inked printing plate.

2) Generally, presses that have been developed for printing of newspapers do not have readily accessible ink rollers or rails. As a result, it is customary to leave the ink on the print cylinders and on the print rail when the press is shut down overnight or for weekends or longer periods. It is required that the ink not harden or deteriorate in some other way during such periods so as to prevent printing from starting immediately after a shut down. Thus, the ink must not only be non-volatile but must be stable upon exposure to air, moisture, or other environmental influences.

3) When printing occurs, the ink, to some extent, penetrates into and is absorbed by the paper. However, if such penetration is too extensive, the mark from one side of a page will show through to the other side and make reading either difficult or, at least, unpleasant. Thus, a newspaper ink must make a relatively superficial mark upon the paper so that most of the body of the paper will block the image from the opposite side.

4) The inking system of most newspaper presses generally consists of rolls of steel or copper-plated steel operating in conjunction with rubber rolls. An ink must be non-corrosive to the metal rolls and must not swell or otherwise degrade the rubber rolls or other rubber components of the inking system.

5) The ink film deposited on newsprint by conventional printing presses is about 2 to 6 microns thick. In that thickness, blacks must be jet black and colors should be intense and bright in order to impart a pleasing appearance to the printed material and to maximize legibility. Inks that are relatively dark or intensely colored have higher "mileage" (i.e., less ink is used per printed item) than inks that are less dark or less intensely colored. At concentrations typically used in formulating inks, a particular dye might provide a darker ink than is required, especially if that dye is used in a composition of the present invention. In such a case, the resulting ink can be applied in a thinner film than usual, resulting in higher "mileage." Alternatively, the concentration of the dye in the ink may be appropriately reduced, resulting in a less expensive ink.

The present invention relates to a printing ink that meets all of the foregoing requirements, particularly the requirement that it exhibit little or no rub-off after printing.

More particularly, the present invention relates to a liquid printing ink comprising a solution of

(a) a dye selected from the group consisting of nigrosine dye, induline dye, basic dyes, and mixtures of the foregoing dyes;

(b) a material selected from the group consisting of fatty acids, rosin acids and mixtures of fatty acids and rosin acids;

(c) an oil;

(d) a moderately polar material; and, optionally,

(e) a tackifying agent, (f) a demulsifier, or both a tackifying agent and a demulsifier.

When used high-speed newspaper printing presses, the inks of the present invention should preferably have viscosities of about 7 to about 20 poise; when used in offset printing presses, the inks of the present invention should preferably have viscosities of about 70 to about 120 poise; and when used in small sheet-fed offset printing presses operating at low speed, the inks of the present invention should preferably have viscosities of about 200 to about 700 poise.

In a preferred embodiment, the present invention relates to a liquid printing ink comprising a solution of

(a) about 1 to about 32 parts by weight of a dye selected from the group consisting of nigrosine dye, induline dye, basic dyes, and mixtures of the foregoing dyes;

(b) about 10 to about 60 parts by weight of a material selected from the group consisting of fatty acids, rosin acids and mixtures of fatty acids and rosin acids;

(c) about 20 to about 70 parts by weight of oil;

(d) about 1 to about 30 parts by weight of a moderately polar material;

(e) 0 to about 30 parts by weight of a tackifying agent; and

(f) 0 to about 10 parts by weight of a demulsifier.

More preferably, the present invention relates to a liquid printing ink comprising a solution of

(a) about 5 to about 25 parts by weight of a dye selected from the group consisting of nigrosine dye, induline dye, basic dyes, and mixtures of the foregoing dyes;

(b) about 12 to about 60 parts by weight of a material selected from the group consisting of fatty acids, rosin acids and mixtures of fatty acids and rosin acids;

(c) about 25 to about 70 parts by weight of oil;

(d) about 2 to about 25 parts by weight of a moderately polar material;

(e) 0 to about 25 parts by weight of a tackifying agent; and

(f) 0 to about 10 parts by weight of a demulsifier.

In an embodiment that is more preferred than the embodiments described above, the present invention relates to a liquid printing ink comprising a solution of

(a) about 12 to about 25 parts by weight of nigrosine dye base or induline dye base and about 1.0 to about 2.0 parts by weight of chrysoidine dye base;

(b) about 12 to about 30 parts by weight of fatty acids;

(c) about 40 to about 70 parts by weight of mineral oil;

(d) about 2 to about 5 parts by weight of moderately polar material (more preferably, said moderately polar material comprises a glycol ether or a mixture of a glycol ether and an ethanolamine);

(e) 0 to about 15 parts by weight of a tackifying agent; and

(f) 0 to about 10 parts by weight of a demulsifier.

In a most preferred embodiment, the present invention relates to a liquid printing ink comprising a solution of

(a) about 12 to about 16 parts by weight of nigrosine dye base and about 1.0 to about 1.3 parts by weight of chrysoidine dye base;

(b) about .16 to about 22 parts by weight of distilled tall oil;

(c) about 56 to about 67 parts by weight of mineral oil; and

(d) about 2 to about 4 parts by weight of a glycol ether (most preferably, diethylene glycol monobutyl ether) and about one part by weight of triethanolamine.

About 0 to about 10 parts by weight of a demulsifier may be included in the foregoing solution.

## The First Component (The Dye)

The dyes that are used to impart color to the inks of the present invention may be classified as nigrosine, induline or basic dyes. For black inks, one would generally use nigrosine dye base (the word "base", as applied to nigrosine, induline and basic dyes identifies the basic form of a dye) or induline dye base, preferably combined with an orange basic dye base, such as chrysoidine base. Nigrosine dyes may be prepared by reacting, at about 200°C, aniline, aniline hydrochloride, nitrobenzene and iron. Induline dyes may be prepared by reacting, at about 180°C, aniline, aniline hydrochloride and phenylazoaniline. The nigrosine and induline dyes so made are generally converted to their dye base form by washing them with dilute sodium hydroxide (i.e., about 0.1 molar NaOH). The nigrosine or induline dye bases, prepared as described above, are highly intense and have an affinity for bleached lignin, hemicellulose and cellulose which are the major constituents of the groundwood papers that are generally used for newsprint. The hydrochloride forms and other acid derivatives of nigrosine dye and induline dye are also usable but inks prepared from such forms are less preferred because such forms may cause the ink to be corrosive and because such forms must generally be neutralized with a base (e.g., ethanolamine) for the nigrosine dye or the induline dye to be soluble in the fatty acid or rosin acid component of my invention.

A chrysoidine dye base, for use in conjunction with nigrosine dye base or induline dye base, as described above, may be prepared by diazotizing aniline in a cold (0-5°C) dilute solution of hydrochloric acid and coupling the diazotized aniline with m-phenylenediamine or 2,4-diaminotoluene in a buffered (p-about 5) cold aqueous medium and then basifying the mixture with aqueous sodium hydroxide to precipitate the dye base.

For colored inks, one would generally use a basic dye. Basic dyes carry a positive charge which causes them to react with materials such as hemicellulose and bleached lignin, which are normally found in groundwood papers. Basic dyes suitable for use in the inks of the present invention include triarylmethanes, such as malachite green, chrystal violet, and methyl violet; xanthenes, such as rhodamine B and rhodamine 6G; azines, such as safranine B; ketoimines, such as auramine O; acridines, such as acridine yellow and acridine orange; oxazines, such as basic blue 3; cyanines, such as basic red 12; and azocyanines, such as basic blue 41. Preferred basic dyes are inexpensive and brilliant, and have high color strength. The basic forms of the foregoing basic dyes (which may be referred to as basic dye bases) are generally preferred to the hydrochloride forms and other acid derivatives of the foregoing basic dyes because such forms may cause the ink to be corrosive and because, in some cases, such forms are not sufficiently soluble in the fatty acid or rosin acid component of the inks of the present invention unless such forms are first neutralized with a base such as ethanolamine.

The Second Component (Fatty Acid or Rosin Acid)

The fatty acid or rosin acid component of the inks of the present invention serves to render the aforementioned dye component oil soluble. This is desirable because newspaper inks are generally oil-based. Thus, although the nigrosine dye, the induline dye, and many of the basic dyes used in the inks of my invention are not oil soluble, such dyes are soluble in fatty acids or rosin acids and mixtures of such dyes and fatty acids or rosin acids are readily soluble in the oil component of the ink of the present invention. It is believed that, generally, the dye component of the ink of the present invention readily combines with the fatty acid or rosin acid component of the ink of the present invention because the dye component has a positive charge and the fatty acid component has a negative charge.

Preferably, the second component of the ink of the present invention is neither exclusively fatty acids nor exclusively rosin acids, but is rather a mixture of these two types of acids. Such mixtures are preferred because the use of fatty acids alone might tend to produce an ink that penetrates more deeply into the paper than is desirable and the rosin acids can act as a tackifying agent (which is the optional fifth component of the inks of the present invention, as described below) that will prevent such excessive penetration. However, if such mixtures are not used, other tackifying agents (described below) can compensate for such excessive penetration.

Mixtures of rosin acids and fatty acids are also preferred as the second component of the inks of the present invention because the use of rosin acids alone might tend to produce an ink that is more tacky than desirable. However, if such mixtures are not used, a tendency of the rosin acids to result in tackiness can be countered by the use of sufficient amounts of the third and fourth components of the inks of the present invention.

Fatty acids may generally be conveniently prepared by heating a fat with an acid or base to convert it to a mixture of glycerin and fatty acids and then separating those products. The fatty acid component of the ink of the present invention may consist of a single fatty acid or a mixture of fatty acids. Unless indicated otherwise, the term "fatty acids", is intended to include both of the foregoing possibilities.

Generally, mixtures of fatty acids obtained from natural sources are less expensive than highly refined fatty acids, such as oleic acid, and such mixtures are, therefore, preferred. Tall oil fatty acids, which are a by-product of the manufacture of kraft paper, are relatively inexpensive. Other inexpensive sources of fatty acids are fats such as fish oil, pork fat, coconut oil, palm oil, beef tallow, soybean oil, and corn oil. These fats can be converted to fatty acids as described above.

Rosin acids (also referred to as resin acids) are the major component of rosin. Rosin is generally obtained as a byproduct from kraft paper manufacture, from pine tree stumps, by harvesting exudates from wounds in pine trees or from naturally occurring deposits of ambers. Rosin generally consists of about 90% by weight of rosin acids and about 10% by weight of neutral matter. About 90% by weight of the rosin acids in rosin is abiatic acid or an isomer thereof and the other 10% by weight of the rosin acids is a mixture of dihydroabiatic acid and dehydroabiatic acid.

The rosin acid component of the ink of the present invention may consist of a single rosin acid or a mixture of rosin acids. Unless indicated otherwise, the term "rosin acids" is intended to indicate both of the foregoing possibilities. Suitable sources of rosin acids include distillates from tall oil crude.

Tall oil crude, obtained as a by-product in the manufacture of kraft paper, is a source of a number of commercial products, including tall oil heads, tall oil rosin, distilled tall oil, and tall oil pitch. These products are obtained by distilling tall oil crude. The initial product (having the lowest boiling point range) obtained from such distillation is tall oil heads, followed by distilled tall oil. The final product obtained is a liquid (at room temperature) which is generally added to the material remaining in the distillation pot. The resulting mixture is then filtered to yield tall oil pitch. As will be explained below, tall oil heads, distilled tall oil, and tall oil pitch all contain tall oil fatty acids and varying amounts of rosin acids. Each of these materials that contain tall oil fatty acids or rosin acids may be used as the fatty acid or rosin acid component of an ink of my invention. In the United States, Arizona Chemical Company and Union Camp Corporation, among others, supply a full line of tall oil products.

Tall oil heads, which is a relatively low boiling fraction of tall oil crude, contains about 68% by weight fatty acids and 0.8% by weight rosin acids, the remainder being fatty materials (also referred to as unsaponifiables) that have no free carboxylic acid functionality. As these latter materials tend to be oily, they may function as the third component of my ink while the fatty acids that are present in the tall oil heads function as the second component. Tall oil heads is probably the cheapest source of fatty acids currently available.

A typical distilled tall oil is available as Acintol D30-LR from Arizona Chemical Company. This product is about 30% by weight rosin acids, about 68% by weight tall oil fatty acids, and about 2% by weight unsaponifiables. Another typical distilled tall oil is available as Acintol D40-LR from Arizona Chemical Company. This product is about 40% by weight rosin acids, about 57% by weight tall oil fatty acids, and about 3.0% by weight unsaponifiables. Although distilled tall oil is more expensive than tall oil heads or tall oil pitch, its odor is less offensive. It is, therefore, preferable to use it for providing the fatty acid component of the inks of the present invention. If desired, distilled tall oil may be further distilled to separate the tall oil fatty acids and the tall oil rosin. The tall oil rosin present in the distilled tall oil may be converted to rosin oil by distillation. The rosin oil may be used as the third component of the inks of the present invention. If distilled tall oil is used without separating the components, it may serve as all or part of the fifth component of an ink of the present invention.

Tall oil pitch generally contains about 34 to 50% by weight fatty acids, 15 to 25% by weight rosin acids, and 30 to 36% by weight unsaponifiables. Tall oil pitch is also relatively inexpensive compared to almost any other source of fatty acids.

### The Third Component (Oil)

The oil that is the third component of the inks of the present invention may consist of a single oil or may be a mixture of oils. The oil should preferably have a boiling point range of about 220 to about 280°C. More preferably, the lower limit of the boiling point range is not less than about 230°C. It is also desirable that the oil be non-toxic and non-carcinogenic.

As indicated above, commercial sources of fatty acids may also provide oils that are useful as all or part of the third component of an ink of the present invention. Other oils that may function as the third component of an ink of the present invention include mineral oil (e.g., paraffin oil), low melting glycerides of fatty acids (e.g., a fat or triglyceride such as soybean oil), and rosin oil. Examples of suitable mineral oils are the oils sold as Exxon Telura 343, Exxon SC 150, Exxon Telura 323, and Exxon Telura 521, available from Exxon Corporation; Sun HP-40, available from Sun Refining and Marketing Company; and Witco 471 and Witco 50, available from Witco Chemical Corporation, Sonneborn Division.

### The Fourth Component (Moderately polar material)

The moderately polar material that is the fourth component of the ink of the present invention should be capable of solvating both the dye component and the oil component of the ink. It may consist of a single material or a mixture of materials. Suitable materials include glycol ethers such as glycol DB (diethylene glycol monobutyl ether), glycol DE (diethylene glycol monoethyl ether), dipropyleneglycol monoethyl ether, and tripropylene glycol monomethyl ether; glycols, such as ethylene glycol; fatty alcohols, such as 2-ethylhexanol; mixed aromatic and alkyl alcohols, such as phenoxyethanol or benzyl alcohol; terpeneols, such as pine oil; ethanolamines, such as ethanolamine and triethanolamine (which may also act as a corrosion inhibitor); and diesters, such as dibutyl phthalate. Preferably, the moderately polar material should be more polar than toluene but less polar than water. It is also preferred that the moderately polar material should have a sphere of solubility based upon the Hansen solubility parameters $\delta d$, $\delta p$ and $\delta h$ such that the distance d defined by:

$$d = (4(\delta d - 16)^2 + (\delta p - 7)^2 + (\delta h - 10.6)^2)^{\frac{1}{2}}$$

is less than about 8 M Pa$^{\frac{1}{2}}$ where $\delta d$, $\delta p$ and $\delta h$ are expressed in M Pa$^{\frac{1}{2}}$ (i.e., millipascals$^{\frac{1}{2}}$) (see A.F.M. Barton, Handbook Of Solubility Parameters, CRC Press Inc., Boca Raton, Florida (1983)). Preferably, the moderately polar material should also be relatively inexpensive and non-toxic and not have an unpleasant odor. Also, such moderately polar materials should preferably have a sufficiently high boiling point (preferably, greater than about 180°C, and more preferably greater than about 200°C) so that they do not readily evaporate. Because a printing press must restart after being left for some time with its rollers coated with ink, ink vehicles must be slow to evaporate and if they do evaporate they should leave a residue that is readily soluble in new ink.

### The Fifth Component (Optional tackifying agent)

The tackifying agent that is the optional fifth component of the ink of the present invention should be soluble in the mixture of the other components. The tackifying agent may consist of a single material or a mixture of materials. The tackifying agent imparts a desirable tack or stickiness to the ink and may also serve to prevent excessive penetration of the ink into the paper which is being printed on. Preferably, the tackifying agent should have a molecular weight less than about 10,000 so that it does not impart undesirable rheological properties to the ink that would cause misting of the ink from printing press rollers. Misting occurs when very small droplets of ink are thrown off into the air by inked printing press rollers. Suitable tackifying agents include rosin acids (which may also function as the second component of the inks of the present invention), maleated rosins, phenolic resins, copal resins, polyester resins, or other oil soluble resinous materials. Tall oil pitch is an example of a suitable tackifying agent. It combines an amorphous nature with a tarry consistency that imparts desirable viscosity and tack characteristics to the ink and acts to prevent undue penetration of the ink into the paper. As indicated above, tall oil pitch also contains both fatty acids and rosin acids. Accordingly, an appropriate quantity of tall oil pitch may also function, in whole or in part, as the fatty acid or rosin acid component of the ink of the present invention in addition to functioning as the tackifying agent component of said ink.

Saturated fatty acids and other saturated materials that may be present in the sources of the fatty acids used in the inks of the present invention (e.g., tall oil heads) are often solids at room temperature and tend to crystallize into networks in an ink formulation when the ink is exposed to room temperature or to a lower temperature. As a result, the ink becomes highly viscous. This high viscosity would interfere with the operation of the ink pumping system that is normally used in newspaper printing presses. Thus, if the ink comprises an appreciable amount of saturated fatty acids (e.g., more than about 10% by weight, based on the weight of the composition), it is necessary to suppress such crystallization. Such crystallization may be suppressed by adding to the ink materials such as polymethyl acrylates or Friedel-Crafts condensation products of phenolic resins and waxes. Such materials are available as pour point depressants from Witco Chemical Corporation, Pearsall Chemical Division. Alternatively, certain of the moderately polar materials that are described above in connection with the description of the fourth component of the inks of my invention may serve as solvents for the crystallates and thus suppress such crystallization. If such a solvent is chosen as part or all of the fourth component of an ink of the present invention, it may not be necessary to add any additional material for suppressing crystallization of saturated materials. Such solvents include pine oil or other terpineols, mixed aliphatic hydrocarbons, glycols or glycol ethers and the like. Other materials that may function to prevent such crystallization are rosin acids. These materials are present in tall oil pitch. Tall oil pitch, itself, when used as all or part of the second, third and fifth components of an ink of the present invention, may also function to prevent such crystallization.

### The Sixth Component (Optional demulsifier)

When a printing plate is used for lithographic printing, the plate comprises an area that is "oil loving" and an area that is "water loving". Before being used for printing, the plate on a lithographic press is first coated with a solution that is primarily water (referred to as a fountain solution). The plate is then exposed to ink which does not wet the plate through the water film on the water loving regions of the plate, but does wet the plate through the water film where a region of the plate is oil loving. After wetting of the oil loving regions of the plate with ink occurs, the plate may be used for printing.

The combination of the dye component (e.g., nigrosine) and the fatty acid component of the inks of the present invention may be sufficiently polar so that the ink tends to break up (i.e., partially emulsify) with water from the fountain solution.

In order to counter this tendency of the inks of the present invention to partially emulsify with water, it is advantageous to increase the hydrophobicity of the ink. Increased hydrophobicity will also minimize wetting of "water loving" portions of a printing plate by the ink.

The hydrophobicity of an ink of the present invention may be increased by adding a demulsifier to the ink (see, for example, D. Klamann, Lubricants and Related Products, Synthesis, Properties, Application, International Standards , Section 9.8, page 212, Verlag Chemie, Deerfield Beach, Florida (1984).

Suitable demulsifiers for use in the inks of the present invention include strongly polar oil soluble surfactants. Examples of such materials are the calcium soap of tall oil fatty acids (preferably at a concentration of about 1 to about 5% by weight, based on the weight of the ink) and dodecylbenzene sulfonic acid (preferably at a concentration of about 0.5 to about 1%, based on the weight of the ink). A more preferred material is Nacure 1051 catalyst which is preferably used at a concentration of about 2.8 to about 5.6% by weight, based on the weight of the inks (available from King Industries of Norwalk, Connecticut). Nacure 1051 catalyst comprises about 50% dinonylnaphthalene sulfonic acid, about 10% dinonylnaphthalene, and about 40% 2-butoxyethanol.

Other ingredients that are typically added to inks, such as corrosion inhibitors, preservatives, and the like, may also be added to the inks of the present invention.

## Method of Preparation

In a preferred method of preparing the nigrosine-containing inks of the present invention, the components (a), (b), (d), and (e) (if component (e) is to be used), as described above, and one-third of component (c) may be combined and then mixed, with heating at about 50 to 85°C (preferably no higher than about 80°C), until a smooth homogeneous mixture is formed, using the minimum temperature required to obtain a homogeneous mixture. The remaining two-thirds of component (c) are then added along with component (f) (if component (f) is to be used) and the mixture is mixed until a homogeneous mixture is obtained. No further heating is generally required while the remaining two-thirds of component (c) is being added and the mixture may be allowed to cool to room temperature.

Other methods of combining and mixing the components of the nigrosine-containing inks of the present invention will be apparent from the Examples set forth below. Generally, at least some heating is required in order to dissolve the dye component the nigrosine-containing inks. It will be understood by one skilled in the art that only the minimum amount of heat necessary to obtain a homogeneous mixture should be used.

Generally, the inks of the present invention containing induline dyes or basic dyes may be prepared by simply combining and mixing the components until a homogeneous mixture is obtained. In some cases, however, if the dye component (or some other component) does not readily dissolve in the mixture, heating may also be required. It will be understood by one skilled in the art that only the minimum amount of heat necessary to obtain a homogeneous mixture should be used.

The inks of the present invention may be used on conventional letterpress and offset printing presses utilizing standard methods of printing. They are particularly useful in printing newspapers and similar articles.

The following non-limiting Examples illustrate the preparation of inks of the present invention. Materials for which a specific manufacturer is not specified are generally available from chemical supply houses. Unless otherwise indicated, the materials are technical grade.

## Examples

### Example 1 -Black Newspaper Ink

13.5 grams of Orient Chemical Corporation nigrosine dye base, 1.1 grams of Carolina Color and Chemical Company chrysoidine Y dye base, 18.2 grams of Acintol D40-LR distilled tall oil, 21.8 grams of Sur HP-40 mineral oil, 1 gram of triethanolamine and 2 grams of glycol DB were added together. The mixture was heated to 80°C, with stirring, and stirring was continued, while maintaining the temperature at 80°C, until the mixture was homogeneous. Then, heating was discontinued and 43.5 grams of Sun HP-40 mineral oil were added and the mixture was stirred until it was homogeneous.

Example 2 -Black Letterpress Newspaper Ink

100 grams of Orient Chemical Corporation nigrosine dye base, 8 grams of Carolina Color and Chemical Company chrysoidine Y dye base, 120 grams of Acintol D30-LR distilled tall oil, and 45 grams of Exxon SC-150 hydrocarbon solvent were added together. The mixture was heated to 80°C, with stirring, and maintained at that temperature, with stirring, until a smooth homogeneous mixture was formed. Then, heating was discontinued and 70 grams of Acintol D30-LR distilled tall oil, 110 grams of Sun HP-40 hydrocarbon oil and 60 grams of diethylene glycol monobutyl ether were added and the mixture was stirred until it was homogeneous.

Example 3 -Black Letterpress Newspaper Ink

100 grams of Orient Chemical Corporation nigrosine dye base, 8 grams Dye Specialties chrysoidine Y dye base, 100 grams of tall oil heads (obtained from Arizona Chemical Company), and 100 ml (90 grams) of Exxon SC 150 aromatic solvent were added together. The mixture was heated to 55°C, with stirring, and maintained at that temperature, with stirring, until a smooth homogeneous mixture was formed. Then, heating was discontinued and 100 ml (90 grams) of glycol DB and 100 ml (83 grams) of Witco 471 mineral oil were added and the mixture was stirred until it was homogeneous. The resulting material was an ink of high mileage having superior printing uniformity.

Example 4 -Black Letterpress Newspaper Ink

100 grams of Orient Chemical Corporation nigrosine dye base and 8 grams of Carolina Color and Chemical Company chrysoidine Y dye base were mixed with 280 grams of tall oil heads (obtained from Arizona Chemical Company) and heated to 80°C, with stirring. Stirring was continued, while maintaining the temperature at 80°C, until the mixture was homogeneous. Then, heating was discontinued and 50 grams of tall oil pitch, 9.3 grams of pine oil, 9 grams of glycol DB and 130 grams of Witco 471 mineral oil were added and the resulting mixture was stirred until it was homogeneous. The resulting material was a stable medium-dark black ink. It is believed that the tall oil pitch in this ink prevents crystallization of saturated materials provided by the tall oil heads upon cooling. The pine oil also serves to prevent such crystallization and also thins the mixture.

Example 5 -Black Offset Newspaper Ink

100 grams of Orient Chemical Corporation nigrosine dye base and 8 grams of Carolina Color and Chemical Company chrysoidine Y dye base were mixed with 80 grams of tall oil fatty acid (obtained from Arizona Chemical Company) and 135 grams of Exxon 343 mineral oil were added. The mixture was heated to 80°C, with stirring, and stirring was continued, while maintaining the temperature at 80°C, until the mixture was homogeneous. Then, 135 grams of tall oil pitch (obtained from Arizona Chemical Company) and 10 grams of glycol DB were added and the mixture was stirred until it was homogeneous. The resulting material was an inexpensive ink of superior mileage.

Example 6 -Black Letterpress Newspaper Ink

140 grams of Acintol D30-LR distilled tall oil, 100 grams of Orient Chemical Corporation nigrosine dye base, 8 grams BASF chrysoidine Y dye base, and 100 grams of Sun HP-40 mineral oil were mixed and heated to 80°C, with stirring. Stirring was continued, while maintaining the temperature at 80°C, until the mixture was homogeneous. Then, heating was discontinued and 180 grams of Sun HP-40 mineral oil, 15 grams of dielythene glycol monobutylether and 5 ml triethanolamine were added, with stirring, and stirring was continued until the mixture was homogeneous.

Example 7 -Red Letterpress Newspaper Ink

70 grams of tall oil rosin (obtained from Arizona Chemical Company) were mixed with 30 grams of Acintol D30-LR distilled tall oil and the mixture was heated to 80°C, with stirring. Stirring was continued until a homogeneous liquid was obtained. Heating was then discontinued and the liquid was added to a mixture of 50 grams of ethylene glycol, 50 grams of Witco 50 mineral oil and 5 grams of ethanolamine and the mixture was stirred until the mixture was homogeneous. Then, one gram of BASF Baso Yellow 124 (auramine G) dye base and 5 grams of BASF Baso Red NB 546 (rhodamine B) dye base were added and the mixture was stirred until the mixture was homogeneous. The resulting ink was a process red of exceptional beauty.

## Example 8 -Black Newspaper Ink

250 kilograms of Orient Chemical Corporation nigrosine dye base and 20 kilograms of Carolina Color and Chemical Company chrysoidine Y dye base were dissolved in 700 kilograms of tall oil heads (obtained from Arizona Chemical Company) by heating to 85°C while stirring. Then heating was discontinued and 400 kilograms of tall oil pitch - (obtained from Arizona Chemical Company), 300 kilograms of Witco 471 mineral oil and 20 kilograms glycol DB, were added while stirring, and stirring was continued until the mixture was homogeneous.

## Example 9 - Red Newspaper Ink

4 kilograms of BASF Baso Red NB 546 (rhodamine B) dye base and 2 kilograms of BASF Baso Yellow 124 (auramine G) dye base were dissolved in 10 kilograms of tall oil heads (obtained from Arizona Chemical Company) by heating at 50°C with stirring. Then, heating was discontinued and 70 kilograms of tall oil pitch (obtained from Arizona Chemical Company), 20 kilograms of Witco 50 mineral oil and 5 kilograms of ethanolamine were added, with stirring. Stirring was continued until the mixture was homogeneous. The resulting material was a brilliant red ink that is particularly suitable for letterpress newspaper printing.

## Example 10 -Process Yellow Newspaper Ink

Following the procedure of Example 9 but substituting 6 kilograms of BASF Baso Yellow 124 (auramine G) dye base for the combination of rhodamine B dye base and auramine G dye base used in example 9, a yellow ink was prepared.

## Example 11 -Process Blue Newspaper Ink

Following the procedure of Example 9, but substituting 4 kilograms of BASF Baso Blue 645 (Victoria blue) dye base and 2 kilograms of Dye Specialties malachite green dye base for the rhodamine B/auramine G combination used in Example 9, a blue ink was prepared.

## Example 12 -Blue Offset Newspaper Ink

10 kilograms of tall oil heads (obtained from Arizona Chemical Company) and 4 kilograms of BASF Baso Blue 645 (Victoria blue) dye base were heated at 50°C until the dye base was dissolved.

Then, heating was discontinued and 80 kilograms of tall oil pitch (obtained from Arizona Chemical Company), two kilograms of glycol DB and 10 kilograms of Exxon Telura 323 mineral oil were added, with stirring. Stirring was continued until the mixture was homogeneous. The resulting blue ink is suitable for offset printing.

## Example 12 -A Black Offset Newspaper Ink

80 grams of Orient Chemical Corporation nigrosine dye base and 6.4 grams of Carolina Color And Chemical Company chrysoldine Y dye base were mixed with 60 grams of Sun HP-40 mineral oil and then 114 grams of a mixture of equal parts of Acintol D40-LR and Union Camp Corporation (of Wayne, N.J.) Unitol NCY Rosin (which had previously been melted together at 155°C and allowed to cool) was added along with 4.6 grams of triethanolamine. The mixture was heated to 80°C and maintained at that temperature, with stirring, for five minutes to form a homogeneous mixture. 17.4 grams of glycol DB and 118 grams fo Sun HP-40 were added and the mixture was stirred without further heating to form a homogeneous mixture.

## Example 13 -A Black Offset Newspaper Ink

180 kilograms of Orient Chemical Corporation nigrosine dye base was stirred with 180 kilograms of Sun HP-40 mineral oil and 140 kilograms of Arizona Chemical Company Acintol FA-2 fatty acid, and 13.5 kilograms of triethanolamine was added with stirring. The resulting mixture was heated to 85°C while stirring. While maintaining the temperature at 85°C, 189 kilograms of Sun HP-40 mineral oil, 189 kilograms of Sun HP-100 mineral oil and 20 kilograms of Carolina Color and Chemical Company chrysoidine T dye base were added, with stirring. The mixture was allowed to cool to 4°C and 52 kilograms of King Industries Nacure 1051 catalyst was added.

## Claims

1. A liquid printing ink comprising a solution of

(a) a dye selected from the group consisting of nigrosine dye, induline dye, basic dyes, and mixtures of the foregoing dyes;

(b) a material selected from the group consisting of fatty acids, rosin acids and mixtures of fatty acids and rosin acids;

(c) an oil;

(d) a moderately polar material; and, optionally,

(e) a tackifying agent, (f) a demulsifier, or both a tackifying agent and a demulsifier.

2. The ink of claim 1, said ink comprising

(a) about 1 to about 32 parts by weight of a dye selected from the group consisting of nigrosine dye, induline dye, basic dyes, and mixtures of the foregoing dyes;

(b) about 10 to about 60 parts by weight of a material selected from the group consisting of fatty acids, rosin acids and mixtures of fatty acids and rosin acids;

(c) about 20 to about 70 parts by weight of oil;

(d) about 1 to about 30 parts by weight of a moderately polar material;

(e) 0 to about 30 parts by weight of a tackifying agent; and

(f) 0 to about 10 parts by weight of a demulsifier.

3. The ink of claim 1, said ink comprising

(a) about 5 to about 25 parts by weight of a dye selected from the group consisting of nigrosine dye, induline dye, basic dyes, and mixtures of the foregoing dyes;

(b) about 12 to about 60 parts by weight of a material selected from the group consisting of fatty acids, rosin acids and mixtures of fatty acids and rosin acids;

(c) about 25 to about 70 parts by weight of oil;

(d) about 2 to about 25 parts by weight of a moderately polar material;

(e) about 0 to about 25 parts by weight of a tackifying agent; and

(f) 0 to about 10 parts by weight of a demulsifier.

4. The ink of claim 1, said ink comprising

(a) about 12 to about 25 parts by weight of nigrosine dye base or induline dye base and about 1.0 to about 2.0 parts by weight of chrysoidine dye base;

(b) about 12 to about 30 parts by weight of a material selected from the group consisting of a fatty acids, rosin acids and mixtures of fatty acids and rosin acids;

(c) about 40 to about 70 parts by weight of mineral oil; and

(d) about 2 to about 5 parts by weight of moderately polar material;

(e) 0 to about 15 parts by weight of a tackifying agent; and

(f) 0 to about 10 parts by weight of a demulsifier.

5. The ink of any one of the preceding claims, wherein said moderately polar material comprises a glycol ether or a mixture of a glycol ether and an ethanolamine.

6. The ink of any one of the preceding claims, said ink comprising

(a) about 12 to about 16 parts by weight of nigrosine dye base and about 1.0 to about 1.3 parts by weight of chrysoidine dye base;

(b) about 16 to about 22 parts by weight of distilled tall oil;

(c) about 56 to about 67 parts by weight of mineral oil; and

(d) about 2 to about 4 parts by weight of a glycol ether and about one part by weight of triethanolamine.

7. The ink of claim 5 or 6, where said glycol ether is diethylene glycol monobutyl ether.

8. A method of marking a cellulose containing substrate comprising applying the ink of any one of the preceding claims to said substrate with a printing press.

9. A method according to claim 8, wherein said substrate is groundwood paper.

10. A method according to claim 9, wherein said printing press is a letterpress or offset printing press.

11. A newspaper printed with the ink of any one of claims 1-7.

# EUROPEAN SEARCH REPORT

European Patent Office

Application number

EP 86 11 7942

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 385 793 (E.F. CARMAN et al.)<br>* Page 1, column 1, lines 35-36; page 2, column 1, lines 1-3; examples; claims * | 1 | C 09 D 11/06<br>C 09 D 11/08 |
| | --- | | |
| A | DE-A-1 546 781 (IBM)<br>* Claims * | 1 | |
| | ----- | | |

TECHNICAL FIELDS SEARCHED (Int. Cl.4)

C 09 D

The present search report has been drawn up for all claims

| Place of search | Date of completion of the search | Examiner |
|---|---|---|
| THE HAGUE | 07-04-1987 | VON KUZENKO M.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82